# FASCICULE DE BREVET EUROPEEN

(11) **EP 4 025 396 B1**
(45) Date de publication et mention de la délivrance du brevet: **12.11.2025**
(21) Numéro de dépôt: 20760742.5
(22) Date de dépôt: 19.08.2020
(51) Int. Cl.: B25J 15/00, B25J 9/10

(54) **MAIN ROBOTIQUE**
ROBOTERHAND
ROBOTIC HAND

(30) Priorité: 04.09.2019 FR 1909724
(43) Date de publication de la demande: 13.07.2022
(73) Titulaire: Centre national de la recherche scientifique, 75016 Paris (FR); Université de Poitiers, 86000 Poitiers (FR)
(72) Inventeur: GAZEAU, Jean-Pierre, 86100 Chatellerault (FR); LAGUILLAUMIE, Pierre, 86180 Buxerolles (FR); VULLIEZ, Philippe, 86800 Lavoux (FR); MIZERA, Camille, 86000 Poitiers (FR)
(74) Mandataire: Hautier IP
(86) Numéro de dépôt international: PCT/EP2020/073262
(87) Numéro de publication internationale: WO 2021/043579

(56) Documents cités:
- WO-A1-2016/005871
- GB-A- 2 551 446
- US-A1- 2009 302 626
- US-A1- 2016 073 584
- YONGKWUN LEE ET AL: "A biomimetic hand employing a dual actuation scheme", JOURNAL OF MECHANICAL SCIENCE AND TECHNOLOGY, KOREAN SOCIETY OF MECHANICAL ENGINEERS, HEIDELBERG, vol. 26, no. 12, 13 January 2013 (2013-01-13), pages 4131 - 4139, XP035164405, ISSN: 1976-3824, DOI: 10.1007/S12206-012-0881-X

## Description

### Etat de la technique antérieure

La réalisation de doigts ou de mains robotiques est un enjeu crucial dans beaucoup de domaines.

On connaît du document FR 3 027 246, une main robotique comprenant quatre doigts robotiques, dont un pouce, chaque doigt présentant plusieurs articulations, chacune étant actionnée au moyen d'un système de câbles et de poulies et par un actionneur électrique. La main robotique ainsi développée possède quatre actionneurs par doigt. Au regard de l'état de la technique antérieure, cet agencement permet de diminuer le nombre d'actionneurs nécessaire pour mettre en mouvement les doigts et ainsi réduire la masse et l'encombrement des mains robotiques.

Bien que satisfaisant, il est désireux de réaliser un agencement de main robotique réduisant encore la masse et l'encombrement.

Un but de l'invention est à la fois de réduire la masse et l'encombrement d'une main robotique et de contenir l'encombrement de ladite main de manière à ressembler le plus possible à une main humaine. Un autre but de l'invention est de simplifier l'actionnement des mains robotiques.

On connait des documents GB2551446, US 2009302626, US 2016073584 et de l'article intitulé « A biomimetic hand employing a dual actuation scheme » de YONGKWUN LEE (JOURNAL OF MECHANICAL SCIENCE AND TECHNOLOGY, KOREAN SOCIETY OF MECHANICAL ENGINEERS, HEIDELBERG) des mains robotiques comprenant une embase, des structures articulées formant des doigts robotiques et au moins un mécanisme d'entrainement associé à des actionneurs. De telles mains robotiques sont difficiles à assembler.

### Exposé de l'invention

Selon un premier aspect de l'invention, on atteint au moins l'un des buts précités avec un dispositif formant une main robotique, telle que définie par les revendications. Le dispositif comprend :
- une embase formant une paume de main,
- au moins deux structures articulées formant chacune un doigt robotique, chaque structure articulée étant reliée fonctionnellement à l'embase et comprenant au moins une articulation, de manière à mettre en mouvement ladite structure articulée par rapport à l'embase,
- au moins un mécanisme d'entraînement pour mettre en mouvement chaque articulation,
- au moins un actionneur agencé pour actionner l'au moins un mécanisme d'entraînement au moyen au moins d'un lien souple d'entraînement reliant et entraînant l'au moins un mécanisme d'entraînement,
- au moins un arbre intermédiaire d'entraînement afin de renvoyer un mouvement de rotation de l'au moins un actionneur, disposé fonctionnellement entre l'au moins un actionneur et l'au moins un mécanisme d'entraînement actionné, de façon que :
- l'au moins un arbre intermédiaire d'entraînement est actionné par un actionneur, et
- l'au moins un arbre intermédiaire d'entraînement est relié fonctionnellement à au moins deux mécanismes d'entraînement distincts, chaque mécanisme d'entraînement étant relié fonctionnellement audit arbre intermédiaire d'entraînement au moyen de l'au moins un lien souple d'entraînement.

Le dispositif selon l'invention a pour avantages de réduire significativement l'encombrement et la masse d'une main robotique et à la fois d'améliorer son esthétisme de manière à ressembler à une main humaine. En outre, le coût de fabrication est significativement réduit du fait de la diminution du nombre d'actionneurs. La main robotique ainsi proposée est plus efficiente que les mains robotiques de l'art antérieur.

Pour ce qui précède et/ou pour la suite de la description, on entend par :
- structure articulée, un élément de structure relié à l'embase par une articulation, ou un ensemble d'éléments de structure reliés l'un à la suite de l'autre par une articulation et un élément de structure parmi l'ensemble d'éléments de structure relié à l'embase par une articulation, chaque élément étant agencé et configuré pour former une phalange d'un doigt robotique, une structure articulée formant un doigt robotique ; par la suite, on pourra utiliser indifféremment structure articulée ou doigt,
- élément de structure, une pièce reliant deux articulations par ses deux extrémités opposées, ou une pièce reliant une articulation par une de ses deux extrémités opposées, l'élément de structure pouvant être de forme longiligne de manière à réaliser une phalange d'un doigt robotique,
- articulation, une liaison mécanique réalisant au moins un mouvement de rotation relative entre deux éléments de structure ou entre l'embase et un élément de structure,
- deux articulations de différents types et/ou de différentes fonctions, deux liaisons mécaniques distinctes, une première liaison mécanique et une deuxième liaison mécanique, réalisant chacune au moins un mouvement de rotation relative entre deux éléments de structure ou entre l'embase et un élément de structure,
- différents types d'articulation, des articulations présentant comme différence un axe de rotation différent, par exemple des axes de rotation non parallèles entre eux, ou des axes de rotation orthogonaux entre eux,
- différentes fonctions d'articulation, des articulations définies par des positions espacées l'une de l'autre, par exemple séparées par un élément de structure, de sorte que, dans le cadre de deux articulations, la première articulation réalise une première fonction, dite fonction de première flexion, et la deuxième articulation réalise une deuxième fonction, dite fonction de deuxième flexion.

Selon des perfectionnements optionnels de l'invention :
- au moins un arbre intermédiaire d'entraînement est relié fonctionnellement à au moins deux mécanismes d'entraînement, chaque mécanisme étant disposé fonctionnellement sur une structure articulée distincte ; cette caractéristique permet de synchroniser deux articulations de deux structures articulées distinctes,
- les au moins deux structures articulées comprennent chacune au moins deux éléments de structure et au moins deux articulations de différents types et/ou de différentes fonctions, qui sont reliés fonctionnellement ensemble pour former un doigt robotique à au moins deux articulations, l'au moins un arbre intermédiaire d'entraînement étant relié fonctionnellement à au moins deux mécanismes d'entraînement associés à une articulation de même type et/ou fonction, chaque mécanisme étant disposé sur une structure articulée distincte ; cette caractéristique permet de synchroniser deux articulations de même type d'au moins deux structures articulées distinctes,
- les au moins deux structures articulées sont sensiblement identiques et comprennent chacune au moins deux éléments de structure et au moins deux articulations de différents types et/ou de différentes fonctions, qui sont reliés fonctionnellement ensemble pour former un doigt robotique à au moins deux d'articulations, l'ensemble des au moins deux structures articulées définissant au moins deux rangs d'articulations de même type et/ou de même fonction, l'au moins un arbre intermédiaire d'entraînement étant relié fonctionnellement à au moins deux mécanismes d'entraînement associés à une articulation de même rang, chaque mécanisme étant disposé sur une structure articulée distincte ; cette caractéristique permet de synchroniser deux articulations de même rang d'au moins deux structures articulées distinctes,
- les au moins deux structures articulées comprennent chacune au moins deux éléments de structure et au moins deux articulations de différents types et/ou de différentes fonctions, qui sont reliés fonctionnellement ensemble pour former un doigt robotique à au moins deux articulations, et les au moins deux articulations sont couplées l'une à l'autre au moyen d'un lien souple de raccordement, de préférence les au moins deux articulations sont consécutives ; cette caractéristique permet de simplifier l'entraînement des articulations,
- l'au moins un actionneur est associé à un seul arbre intermédiaire d'entraînement,
- l'au moins un actionneur comprend un axe de rotation qui est parallèle et non coaxial avec l'axe de l'au moins un arbre intermédiaire d'entraînement, de façon que chaque arbre intermédiaire d'entraînement est actionné par un actionneur au moyen d'au moins un lien souple d'actionnement,
- le dispositif comprend au moins deux actionneurs, un premier actionneur et un deuxième actionneur, agencés parallèlement et l'un à côté de l'autre, dont le deuxième actionneur présente un arbre de rotation débouchant d'un côté opposé à celui du premier actionneur ; cette caractéristique permet de limiter d'autant plus l'encombrement du dispositif formant main robotique,
- le dispositif formant une main robotique comprend quatre structures articulées formant quatre doigts robotiques, en particulier quatre doigts robotiques disposés par rapport à l'embase de manière à ce que trois doigts robotiques puissent être sensiblement alignés entre eux et parallèles au plan géométrique passant par l'embase, de préférence un des quatre doigts robotiques forme un pouce,
- le dispositif formant une main robotique comprend exactement deux actionneurs pour actionner respectivement deux arbres intermédiaires d'entraînement de manière à entraîner respectivement deux rangs d'articulations, de préférence deux rangs d'articulations d'au moins trois structures articulées, dont un pouce ; cette caractéristique permet de synchroniser le mouvement de toutes les structures articulées, par exemple pour saisir des pièces cylindriques,
- le dispositif formant la main robotique comprend exactement six actionneurs pour actionner respectivement six arbres intermédiaires d'entraînement de manière à entraîner respectivement trois rangs d'articulations d'au moins trois structures articulées formant au moins trois doigts robotiques hormis le pouce et trois articulations d'une structure articulée formant un pouce robotique,
- l'au moins une articulation est du type réalisant une liaison de pivotement autour d'un axe de flexion par rapport à l'embase, l'axe de l'au moins un arbre intermédiaire étant sensiblement parallèle à l'axe de flexion de l'au moins une articulation,
- l'au moins un arbre intermédiaire d'entraînement comprend au moins une poulie d'entraînement et l'au moins un mécanisme d'entraînement comprend au moins une poulie de réception, de façon que l'au moins un lien souple d'entraînement est relié auxdites poulies,
- le dispositif comprend un support d'actionnement sur lequel l'au moins un actionneur et l'au moins un arbre intermédiaire d'entraînement sont fixés, le support étant relié fonctionnellement à l'embase,
- l'au moins un actionneur et l'au moins un arbre intermédiaire d'entraînement sont insérés et/ou fixés dans l'embase.

Selon un second aspect de l'invention, il est prévu un robot comprenant au moins un bras articulé, lequel comprend au moins un dispositif formant une main robotique selon l'une plusieurs des caractéristiques du premier aspect de l'invention.

### Description des figures et des modes de réalisation

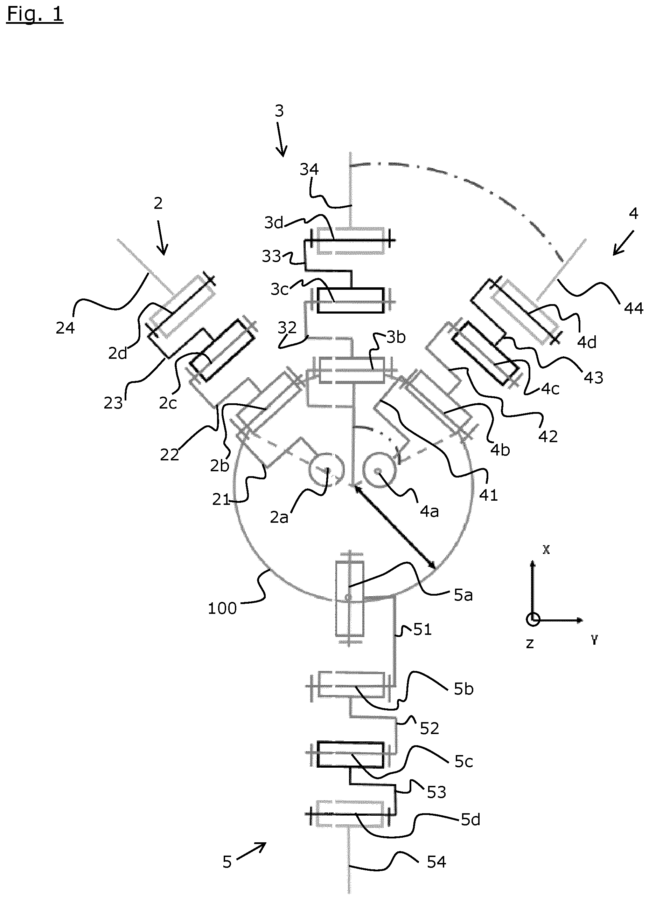

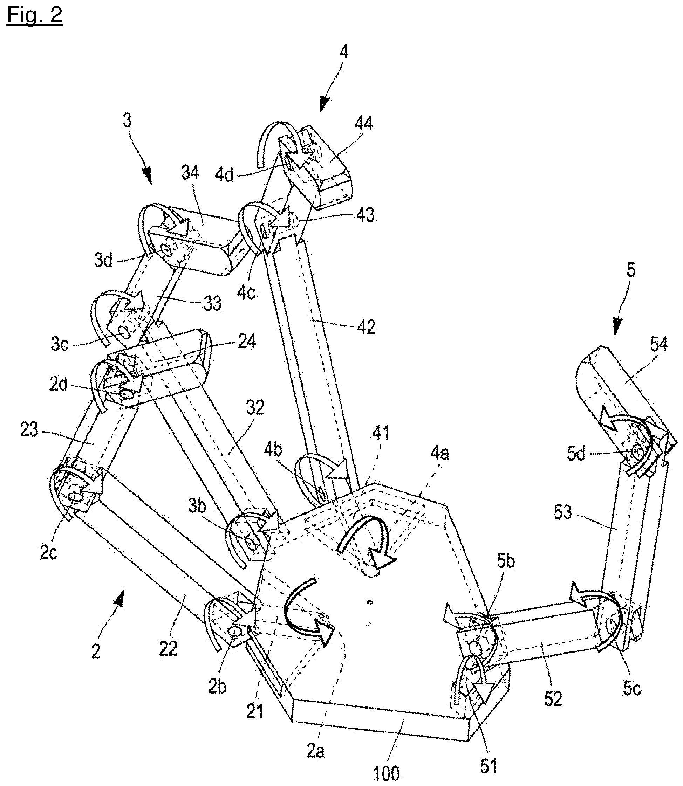

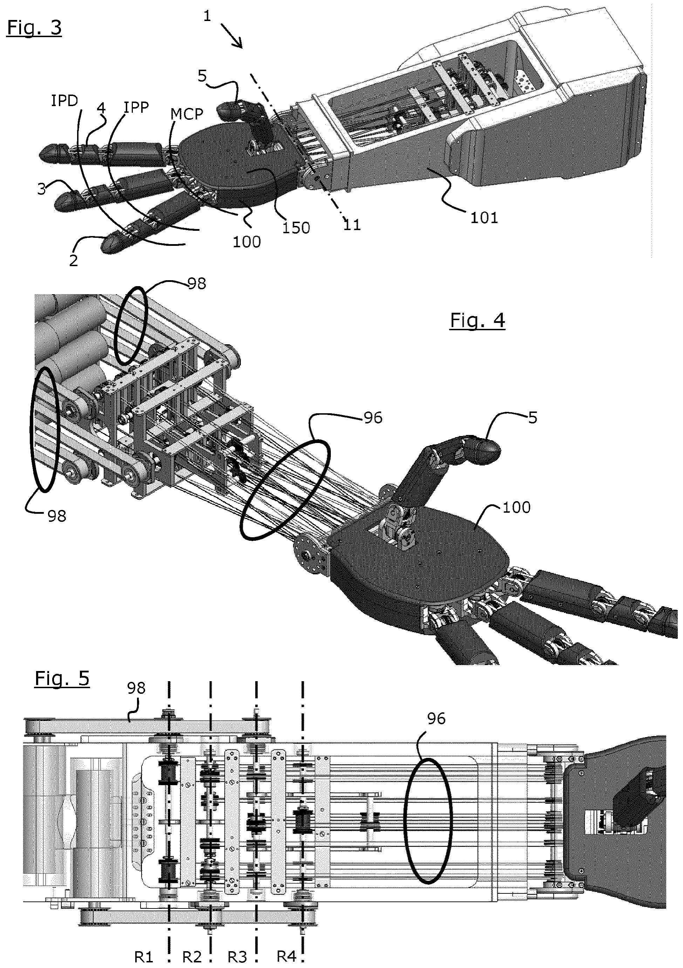

D'autres caractéristiques et avantages de l'invention apparaîtront à la lecture de la description détaillée de mises en œuvre et de modes de réalisation nullement limitatifs, au regard de figures annexées sur lesquelles :
- la Figure 1 est un schéma cinématique de quatre structures articulées, formant chacune un doigt robotique, reliées à une embase d'un dispositif formant une main robotique selon un mode de réalisation de l'invention ;
- la Figure 2 est une vue en perspective d'une embase et de quatre structures articulées, formant chacune un doigt robotique, reliées à une embase d'un dispositif formant une main robotique conformes à la Figure 1 ;
- **la** Figure 3 est une vue en perspective d'un dispositif formant une main robotique selon un mode de réalisation de l'invention comprenant quatre structures articulées, formant chacune un doigt robotique, reliées à une embase conformes aux Figures 1 et 2, et un support destiné à comprendre des actionneurs et des arbres intermédiaires d'entraînement, le support étant relié à l'embase de manière à former un avant-bras ;
- **la** Figure 4 est une vue en perspective d'un dispositif formant une main robotique conforme à la Figure 3, le support étant partiellement représenté et vu par transparence de manière à distinguer une partie des actionneurs, des arbres intermédiaires d'entraînement, des liens souples d'actionnement entre lesdits actionneurs et lesdits arbres et des liens souples d'entraînement entre lesdits arbres et l'embase selon un mode de réalisation ;
- la Figure 5 est une vue de dessus d'un support comprenant deux actionneurs disposés tête bêche et quatre arbres intermédiaires d'entraînement disposés parallèlement les uns par rapport aux autres ;

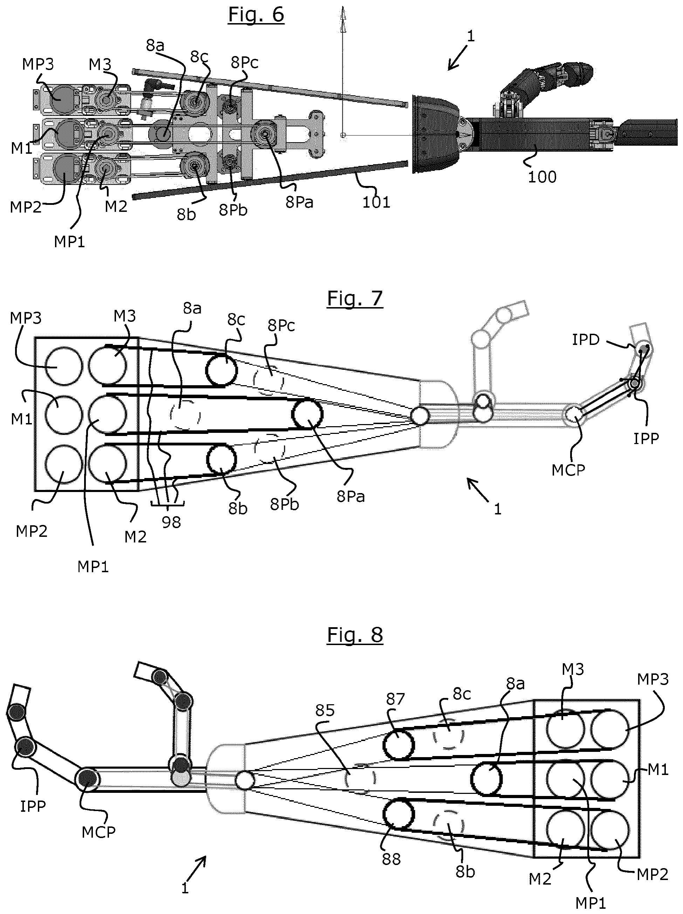

- la Figure 6 est une vue de gauche et horizontale d'un dispositif formant une main robotique conforme aux Figures 3 à 5, le support étant vu en transparence, lequel comprenant six actionneurs et six arbres intermédiaires d'entraînement, lesquels sont superposés selon trois étages : un premier étage, un deuxième étage et un troisième étage, comprenant respectivement deux actionneurs et deux arbres intermédiaires d'entraînement ;
- la Figure 7 est une vue de gauche d'un dispositif formant une main robotique représenté schématiquement et conforme à la Figure 6, représentant schématiquement le parcours de liens souples d'entraînement entre des arbres intermédiaires d'entraînement et des poulies d'entraînement montées sur des articulations de structures articulées, en particulier destiné à commander l'abduction-adduction du pouce, et les flexions-extensions des autres doigts ;
- la Figure 8 est une vue de droite d'un dispositif formant une main robotique représenté schématiquement et conforme à la Figure 6, représentant schématiquement le parcours de liens souples d'entraînement entre des arbres intermédiaires d'entraînement et des poulies d'entraînement montées sur des articulations de structures articulées, en particulier destiné à commander les flexions-extensions du pouce et l'abduction-adduction des autres doigts ;

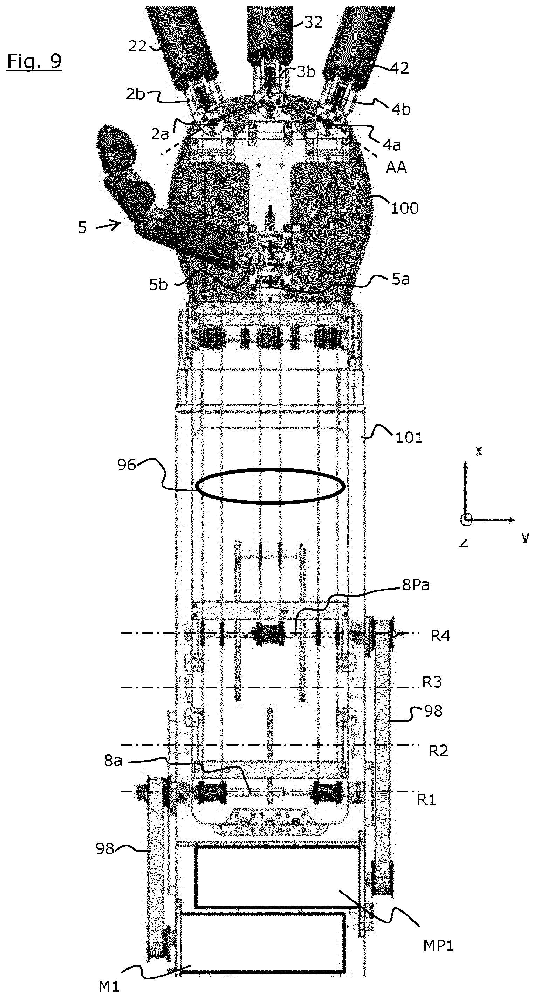

- la Figure 9 est une vue de dessus du dispositif formant une main robotique conforme aux Figures 5 et 6, le support étant vu en transparence de manière à montrer uniquement le deuxième étage d'actionneurs et d'arbres intermédiaires d'entraînement ;

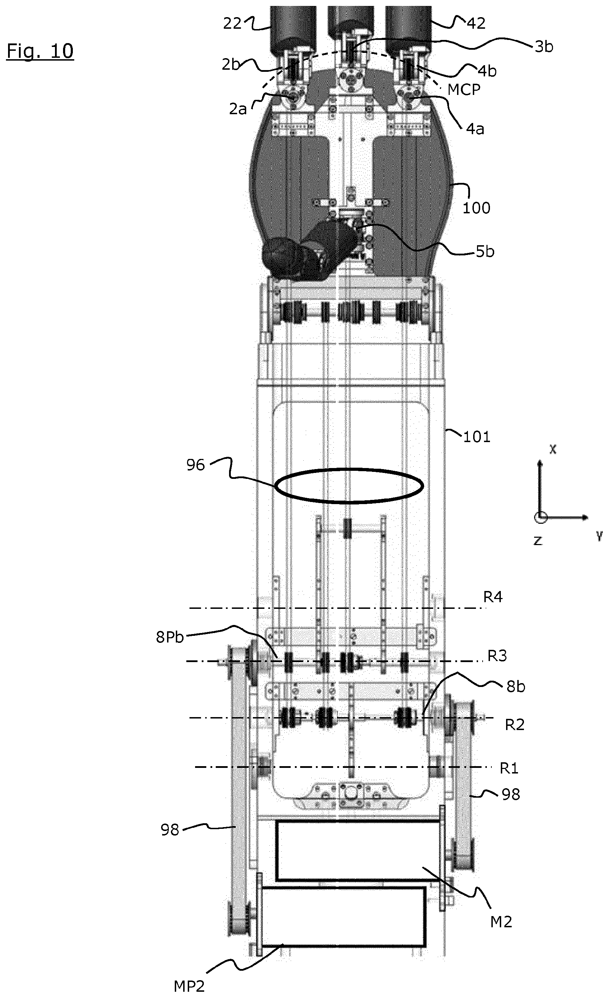

- la Figure 10 est une vue de dessus du dispositif formant une main robotique conforme aux Figures 5 et 6, le support étant vu en transparence de manière à montrer uniquement le premier étage d'actionneurs et d'arbres intermédiaires d'entraînement ;

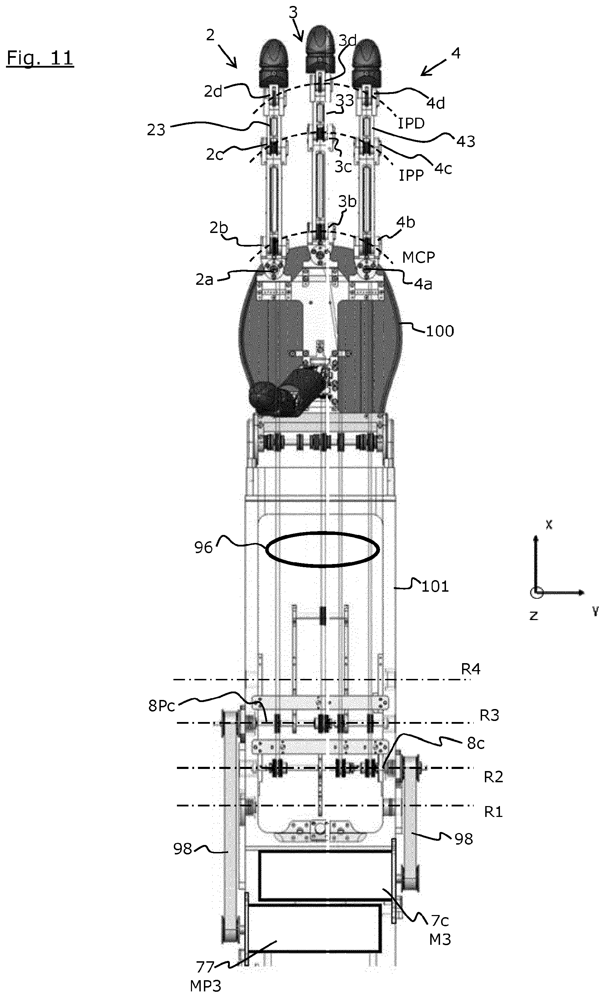

- la Figure 11 est une vue de dessus du dispositif formant une main robotique conforme aux Figures 5 et 6, le support étant vu en transparence de manière à montrer uniquement le troisième étage d'actionneurs et d'arbres intermédiaires d'entraînement ;

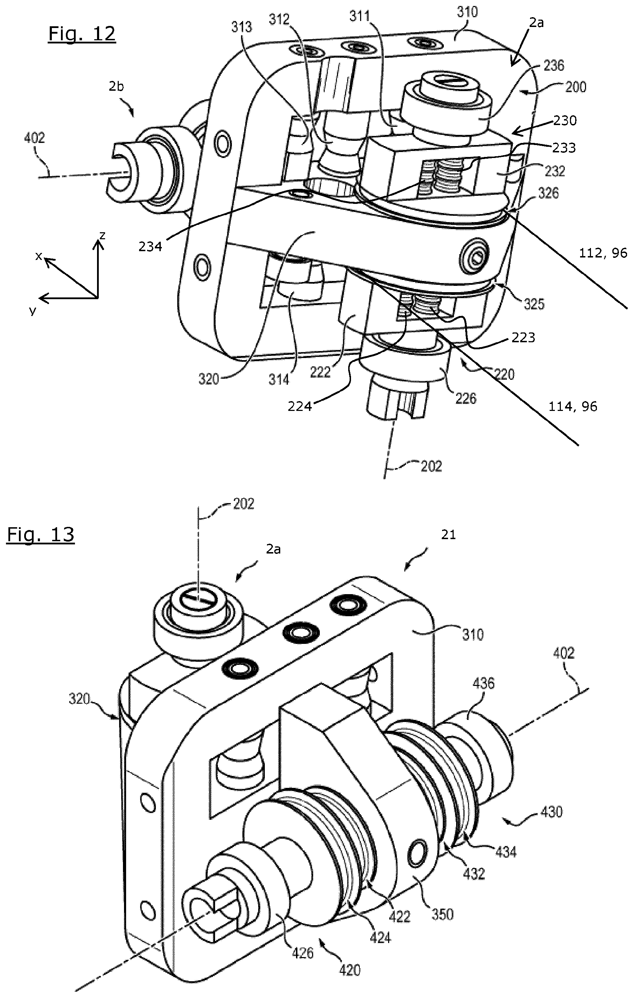

- la Figure 12 est une vue en perspective de deux articulations et d'un élément de structure reliant les deux articulations, les deux articulations présentant des axes de rotation non parallèles entre eux, correspondant à des axes d'abduction-adduction et de flexion-extension ;
- la Figure 13 est une vue en perspective, selon un angle d'observation opposée à la Figure 12, de deux articulations et d'un élément de structure reliant les deux articulations, les deux articulations présentant des axes de rotation non parallèles entre eux, correspondant à des axes d'abduction-adduction et de flexion-extension ;

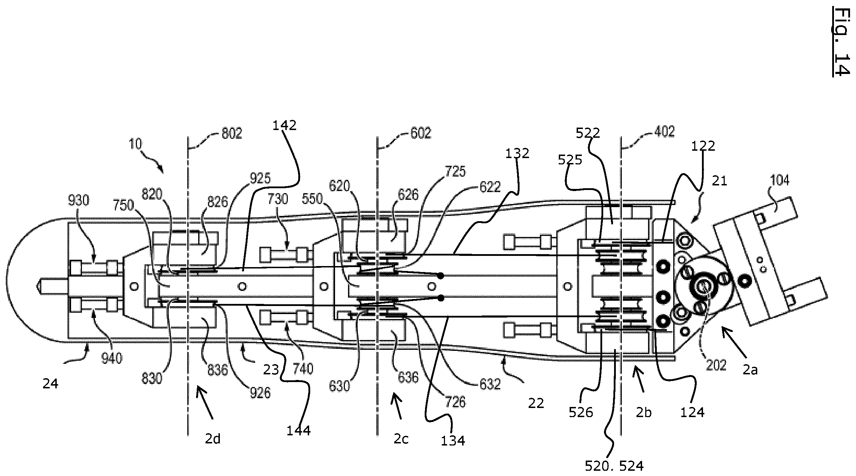

- la Figure 14 est une vue de dessus d'une structure articulée formant un doigt robotique comprenant quatre articulations, une articulation d'abduction-adduction et trois articulations de flexion-extension.

### Description d'un exemple de mode de réalisation

Les modes de réalisation qui seront décrits dans la suite ne sont nullement limitatifs ; on pourra notamment mettre en œuvre des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

La figure 3 illustre un dispositif 1 formant une main robotique comprenant une embase 100 formant une paume, et quatre structures articulées 2, 3, 4 et 5 formant des doigts, chaque structure articulée étant reliée à l'embase de manière à réaliser une main robotique, ressemblant sensiblement à une main humaine. L'embase 100 présente une forme sensiblement rectangulaire, qui à une extrémité distale, présente trois doigts 2, 3, 4 disposés les uns à côté des autres, lesdits doigts, au repos comme représenté sur la figure 3, s'étendant dans le plan géométrique défini par l'embase. En comparaison avec la main humaine, les structures articulées ou doigts 2, 3 et 4 correspondent respectivement à l'index, le majeur et l'annulaire. L'embase 100 présente en outre, sur une face 150 de paume, une structure articulée 5 formant un pouce qui s'étend de manière sensiblement perpendiculaire à la face de paume de l'embase. Le dispositif 1 comprend en outre un support d'actionnement 101 recevant et renfermant des moyens d'actionnement et de transmission de mouvement qui seront décrits ci-dessous. Le support d'actionnement 101 est relié à une extrémité proximale de l'embase 100 par une articulation. Selon le mode de réalisation représenté, l'articulation entre l'embase 100 et le support d'actionnement 101 est une liaison mécanique de pivotement de flexion 11. Le support d'actionnement 101 réalise ainsi un avant-bras. Selon d'autres modes de réalisation non représentés, les moyens d'actionnement et de transmission de mouvement peuvent être insérés dans l'embase.

Les figures 1 et 2 illustrent les degrés de mobilité des structures articulées 2, 3, 4 et 5 par rapport à l'embase 100. Chaque structure articulée, ou doigt, comprend des éléments de structure reliés l'un à l'autre par des articulations de manière à mettre en mouvement ladite structure articulée par rapport à l'embase. En particulier, chaque structure articulée comprend au moins une articulation définissant une liaison mécanique entre l'embase et ladite structure articulée. Chaque structure articulée comprend une succession alternée d'éléments de structure et d'articulations.

Il est prévu deux types d'élément de structure. Le dispositif prévoit d'une part des éléments de structure de liaison 21, 41 et 51 de manière à raccorder deux différents types d'articulation, et d'autre part des éléments de structure ergonomique de manière à former des phalanges. En référence aux figures, chaque doigt 2, 3, 4 et 5 comprend respectivement une première phalange 22, 32, 42, 52, une deuxième phalange 23, 33, 43, 53, et une troisième phalange 24, 34, 44, 54.

Le dispositif prévoit deux types d'articulations : des articulations de type abduction-adduction de manière à réaliser au moins un pivotement selon l'axe z (voir figure 1), et des articulations de type flexion-extension de manière à réaliser au moins un pivotement selon l'axe y (voir figure 1). Selon le mode de réalisation représenté, il est prévu quinze articulations pour mettre en mouvement les structures articulées par rapport à l'embase. Trois structures articulées disposent de quatre articulations : le pouce 5, l'index 2 et l'annulaire 4. Le majeur 3 dispose de trois articulations.

Selon les modes de réalisation représentés, le pouce 5, l'index 2 et l'annulaire 4 disposent chacun d'une articulation d'abduction-adduction 2a, 4a, 5a reliant l'embase 100 à une première extrémité proximale d'un élément de structure de liaison 21, 41, 51. Les articulations d'abduction-adduction de l'index 2a et de l'annulaire 4a sont positionnées près de l'extrémité distale de l'embase 100 (voir figure 2). Les deux articulations d'abduction-adduction définissent un rang d'articulations d'abduction-adduction. L'articulation d'abduction-adduction 5a est positionnée sur la face de paume 150 (voir figure 3). Le majeur 3 ne dispose pas d'articulation d'abduction-adduction.

Chaque doigt 2, 4, 5 comprend une première articulation de flexion-extension 2b, 4b, 5b reliant l'extrémité distale de l'élément de structure de liaison 21, 41, 51 à une extrémité proximale d'une première phalange 22, 42, 52. Le majeur 3 comprend également une première articulation de flexion-extension 3b reliant l'extrémité distale de l'embase 100 à une extrémité proximale d'une première phalange 32. Les premières articulations de flexion-extension définissent un rang d'articulations métacarpo phalangienne MCP. En particulier, le rang d'articulations métacarpo phalangienne MCP comprend les premières articulations de flexion-extension 2b de l'index, 3b du majeur et 4b de l'annulaire, voir figure 3.

Ensuite, chaque doigt 2, 3, 4 et 5 comprend une deuxième articulation de flexion-extension 2c, 3c, 4c, 5c reliant l'extrémité distale de la première phalange 22, 32, 42, 52 à une extrémité proximale d'une deuxième phalange 23, 33, 43, 53. Les deuxièmes articulations de flexion-extension définissent un rang d'articulations interphalangienne proximale IPP. En particulier, le rang d'articulations interphalangienne proximale comprend les deuxièmes articulations de flexion-extension 2c de l'index, 3c du majeur et 4c de l'annulaire, voir figure 3.

Enfin, chaque doigt 2, 3, 4 et 5 comprend une troisième articulation de flexion-extension 2d, 3d, 4d, 5d reliant l'extrémité distale de la deuxième phalange 23, 33, 43, 53 à une extrémité proximale d'une troisième phalange 24, 34, 44, 54. Les troisièmes articulations de flexion-extension définissent un rang d'articulations interphalangienne distale IPD. En particulier, le rang d'articulations interphalangienne distale IPD comprend les troisièmes articulations de flexion-extension 2d de l'index, 3d du majeur, 4d de l'annulaire, voir figure 3.

En référence à la figure 1, toutes les articulations sont des liaisons pivots. Concernant l'index 2 et l'annulaire 4, chaque articulation d'abduction-adduction 2a, 4a est réalisée par une liaison pivot d'axe z. Concernant le pouce 5, l'articulation d'abduction-adduction 5a est réalisée par une liaison pivot d'axe x. Concernant les doigts 3 et 5, chaque articulation de flexion-extension est réalisée par une liaison pivot d'axe y. Concernant les doigts 2 et 4, chaque articulation de flexion-extension est réalisée par une liaison pivot d'axe y, lorsque lesdits doigts, l'index 2 et l'annulaire 4, sont parallèles au majeur 3, comme représenté par exemple en figure 11.

Le dispositif comprend des poulies réceptrices d'entraînement positionnées près des articulations de manière à mettre en mouvement de pivotement les éléments de structure les uns par rapport aux autres, voir figures 12, 13 et 14.

Les figures 12 et 13 montrent un élément de structure de liaison 21 portant une articulation d'abduction-adduction 2a et une articulation de flexion-extension 2b, du type prévu pour l'index. L'élément de structure de liaison est le même pour l'annulaire et le pouce. L'élément de structure de liaison 21 présente la forme d'un cadre support 310 dont le plan moyen s'étend, au repos c'est-à-dire en position centrée par rapport aux positions extrêmes d'abduction et d'adduction, dans un plan yz. Le cadre support 310 porte respectivement sur ses deux faces opposées de part et d'autre du plan moyen en yz, l'articulation 2a d'abduction-adduction dont l'axe de rotation s'étend selon l'axe z, et l'articulation 2b de flexion-extension dont l'axe de rotation s'étend selon l'axe y.

L'élément de structure de liaison comprend en outre un pontet 320 sur une première face du cadre support 310. Le pontet 320 présente la forme d'un dièdre dont le plan médian en épaisseur s'étend dans un plan en xy et qui supporte à rotation deux demi-arbres d'abduction-adduction 220, 230 agencés de manière coaxiale, dont l'axe de pivotement 202 s'étend parallèlement à l'axe z. Les demi-arbres 220, 230 sont maintenus immobiles par rapport au pontet 320. Les demi-arbres 220, 230 sont articulés par rapport à l'embase 100, par l'intermédiaire des roulements, ou paliers 226, 236, de sorte que l'élément de structure de liaison 21 pivote relativement à l'embase autour de l'axe 202. L'élément de structure de liaison 21 comprend des poulies réceptrices d'entraînement 325 et 326 agencées pour recevoir chacune un lien souple d'entraînement 96, de manière à ce que l'élément de structure de liaison 21 soit mis en mouvement de pivotement autour de l'axe 202 par adhérence du lien souple sur la poulie.

De préférence, les liens souples sont accrochés sur les poulies réceptrices 325, 326 par des points d'ancrage respectifs qui sont diamétralement opposés par rapport à l'axe 202.

En variante les liens souples d'entraînement peuvent être enroulés au moins partiellement autour des poulies 325, 326, voire faire un tour complet autour de ces poulies, dans des sens respectivement opposés, et leurs secondes extrémités sont fixées sur le pontet 320.

Dans les deux cas, l'homme de l'art comprendra que le déplacement à rotation d'un actionneur dans un sens applique un effort de traction sur le premier câble adduction 114 et par action sur la poulie 325 et/ou le pontet 320 conduit à un déplacement du doigt dans une direction abduction-adduction (voir l'arc de cercle de la figure 1). Inversement le déplacement à rotation du même actionneur dans le sens inverse applique un effort de traction sur le deuxième câble abduction 112 et par action sur la poulie 326 et/ou le pontet 320 conduit à un déplacement du doigt dans une direction abduction-adduction.

Entre les poulies 325, 326 et les paliers 226, 236, chaque demi-arbre ou tourillon 220, 230 porte une cage 222, 232 définissant chacune une fenêtre pour le passage et le guidage de liens souples d'entraînement ou câbles 96, en particulier des couples de câbles 122, 124 ; 132, 134, dirigés vers les articulations avales 2b et 2c. Chaque cage 222, 232 possède deux séries de pièces tournantes cylindriques, respectivement coaxiales, en forme de diabolo 223, 224 et 233, 234. Chaque série de pièces en forme de diabolo 223, 224 et 233, 234 est centrée sur un axe respectif en z. Les pièces en diabolo 223, 224 prévues dans la cage 222 sont symétriques par rapport à l'axe 202. De même les pièces en diabolo 233, 234 prévues dans la cage 232 sont symétriques par rapport à l'axe 202.

Chaque série de pièces en forme de diabolo 223, 224 et 233, 234 comporte par ailleurs un nombre de pièces en forme de diabolo égal au nombre de câbles à guider, respectivement 122, 132 et 124, 134.

Selon le mode de réalisation représenté sur la figure 12, chaque demi-arbre ou tourillon 220, 230 guide deux liens souples d'entraînement ou câbles 122, 132 et 124, 134. En conséquence chaque série de pièces 223, 224 et 233, 234 en forme de diabolo comporte au moins deux pièces en forme de diabolo empilées axialement en z. Sur l'axe 202 du mouvement d'abduction-adduction, il est donc prévu un jeu d'au moins quatre diabolos positionné sur la partie supérieure de l'axe pour guider au moins deux câbles et un jeu de quatre diabolos (en partie visible) sur la partie inférieure de l'axe pour guider deux câbles.

Chaque paire de deux diabolos adjacents appartenant aux deux séries de pièces 223, 224 et 233, 234 situées dans une cage commune 222, 232 définissent ainsi des passages respectifs destinés à recevoir les liens souples d'entraînement destinés à mettre en mouvement les poulies réceptrices. Chaque câble est ainsi guidé entre deux diabolos tournants.

Chaque diabolo est susceptible de rotation autour de son axe, sur une tige d'articulation centrale liée à la cage 222 ou 232, pour limiter les frictions entre les câbles et les diabolos.

Après leur passage à travers l'articulation 2a d'abduction-adduction, chacun des liens souples d'entraînement ou câbles est ainsi guidé via un diabolo 311, 312, 313 et 314, 315, 316 vers l'axe de l'articulation 2b de flexion-extension, voir figure 14.

En référence à la figure 13, l'élément de structure de liaison 21 comprend un pontet 350 sur une deuxième face du cadre support 310. Le pontet 350 présente la forme d'un dièdre dont le plan médian en épaisseur s'étend dans un plan en xz et qui supporte à rotation deux demi-arbres de flexion-extension 420 et 430 coaxiaux s'étendant selon un axe de flexion-extension 402 de l'articulation 2b de flexion-extension, qui est parallèle à l'axe y, et qui est orthogonale à l'axe d'abduction-adduction 202. Les deux demi-arbres de flexion-extension 420, 430 sont reliés de manière fixe en rotation par rapport au pontet 350. Les deux demi-arbres ou tourillons 420, 430 sont situés respectivement de part et d'autre du pontet 350.

Les demi-arbres portent chacun un roulement 426, 436 agencé pour réaliser une articulation de pivotement du deuxième élément de structure (non représenté), ou de la première phalange 22, par rapport à l'élément de structure de liaison 21 de sorte que la première phalange pivote relativement audit élément de structure de liaison 21. Les roulements 426, 436 forment paliers de guidage à rotation pour une chape 520 (représentée en figure 14) de la première phalange 22.

Le demi-arbre 420 porte deux poulies de renvoi 422, 424 sur lesquelles des liens souples d'entraînement ou câbles sont respectivement prévus pour être enroulés en parcourant un tour de ces poulies. L'autre demi-arbre 430 porte deux autres poulies de renvoi 432, 434 sur lesquelles des liens souples ou câbles sont respectivement prévus pour être enroulés en parcourant un tour de ces poulies. Les poulies de renvoi 422, 424 et 432, 434 sont libres de rotation par rapport au pontet 350 autour de l'axe 402.

Le tour mort des câbles réalisé autour des poulies de renvoi 422, 424 et 432, 434 de guidage, libres en rotation autour de leur axe, permet d'interdire que des câbles ne sortent des poulies en fonction de la configuration articulaire du mouvement de flexion-extension des phalanges.

Les poulies de renvoi permettent de renvoyer respectivement quatre câbles provenant des cages 222 et/ou 232 vers des articulations avales de flexion-extension de la phalange intermédiaire 23.

La figure 14 montre un mode de réalisation d'une structure articulée ou doigt. Comme indiqué précédemment, tous les doigts de la main robotique sont fonctionnellement similaires à l'exception du majeur 3 qui ne comprend pas d'articulation d'abduction-adduction. Pour ce qui suit et pour éviter des répétitions, une seule structure articulée est décrite, en utilisant les références de l'index 2. La structure articulée 2 comprend quatre éléments de structure : un élément de structure de liaison 21 et trois phalanges 22, 23 et 24. De préférence, la structure articulée est actionnée par seulement trois actionneurs (décrits par la suite). Chaque élément de structure est mis en mouvement par l'intermédiaire de deux liens souples d'entraînement ou câbles 112, 114 ; 122, 124 ; 132, 134 et 142, 144.

Les deux branches 522, 524 de la chape 520 de la première phalange 22 portent des poulies 525, 526 centrées sur l'axe 402, lesdites poulies guidant la seconde extrémité respective des câbles 122, 124 qui permettent de mettre en mouvement la première articulation d'abduction-adduction 2b.

Les poulies 525, 526 doivent être liées à rotation avec la chape 520 si les extrémités des câbles 122, 124 sont fixées sur ces poulies.

Les poulies 525 et 526 peuvent être libres à rotation par rapport à la chape 520, autour de l'axe 402 si les extrémités des câbles 122, 124 sont fixées non pas sur les poulies précitées mais sur la chape 520.

Les deux branches 626, 636 de la deuxième phalange 23 portent des poulies 725, 726 centrées sur l'axe 602, lesdites poulies guidant la seconde extrémité respective des câbles 132, 134 qui permettent de mettre en mouvement la deuxième articulation d'abduction-adduction 2c.

Les deux branches 826, 836 de la troisième phalange 24 portent des poulies 925, 926 centrées sur l'axe 802, lesdites poulies guidant la seconde extrémité respective des câbles 142, 144 qui permettent de mettre en mouvement la troisième articulation d'abduction-adduction 2c. Selon un mode de réalisation, les premières extrémités des câbles 142, 144 sont fixées à la première phalange 22 en amont de l'articulation 2c. Ensuite les câbles 142, 144 sont enroulés respectivement autour des poulies 622, 632 centrées sur l'axe 602. Les poulies 622, 632 sont libres en rotation autour de l'axe 602. Le sens d'enroulement du câble 144 autour de la poulie 632 s'effectue dans un sens inverse du sens d'enroulement du câble 142 autour de la poulie 622. En outre, les câbles 142 et 144 se croisent avant d'atteindre les poulies 925, 926 ; le croisement des câbles 142 et 144 est visible sur la figure 7 mais non visible sur la figure 14. Lors de l'entraînement de l'articulation 2c (ou du pivotement de la phalange 23 relativement à la phalange 22) et du fait de la traction exercée par l'un ou l'autre des câbles 142 ou 144, les poulies 925, 926 sont entraînées en pivotement de manière à entraîner en mouvement l'articulation 2d. Ce mode de réalisation permet d'éviter l'utilisation d'un actionneur, en utilisant un seul actionneur pour deux articulations.

On va maintenant décrire les moyens d'actionnement et d'entraînement permettant de mettre en mouvement les structures articulées de la main robotique.

En référence aux figures 6, 7 et 8, le dispositif formant une main robotique comprend six actionneurs M1, M2, M3, MP1, MP2 et MP3 pour l'actionnement de toutes les articulations. Les six actionneurs comprennent de préférence des motoréducteurs. L'actionneur M1 est agencé pour actionner les articulations du rang d'articulations d'abduction-adduction. L'actionneur M2 est agencé pour actionner les articulations du rang d'articulations métacarpo phalangienne. L'actionneur M3 est agencé pour actionner les articulations du rang d'articulations interphalangienne proximale. L'actionneur MP1 est agencé pour actionner l'articulation d'abduction-adduction du pouce 5. L'actionneur MP2 est agencé pour actionner la première articulation de flexion-extension du pouce 5. L'actionneur MP3 est agencé pour actionner la deuxième articulation de flexion-extension du pouce 5. Les six actionneurs s'étendent horizontalement et sont superposés les uns au-dessus des autres selon deux colonnes de trois actionneurs superposés. Cette caractéristique permet d'améliorer la compacité du dispositif formant une main robotique.

Le dispositif 1 formant une main robotique comprend en outre six arbres intermédiaires d'entraînement 8a, 8b, 8c, 8Pa, 8Pb, 8Pc. Les arbres intermédiaires d'entraînement participent avec les liens souples d'entraînement à transmettre les mouvements de rotation des actionneurs aux poulies réceptrices des articulations, de manière à mettre mouvement la main robotique. En particulier, chaque arbre intermédiaire d'entraînement 8a, 8b, 8c, 8Pa, 8Pb, 8Pc est actionné par un seul actionneur. En référence aux figures 6, 7 et 8, l'actionneur M1 est associé à l'arbre intermédiaire d'entraînement 8a, l'actionneur M2 est associé à l'arbre intermédiaire d'entraînement 8b, l'actionneur M3 est associé à l'arbre intermédiaire d'entraînement 8c, l'actionneur MP1 est associé à l'arbre intermédiaire d'entraînement 8Pa, l'actionneur MP2 est associé à l'arbre intermédiaire d'entraînement 8Pb, l'actionneur MP3 est associé à l'arbre intermédiaire d'entraînement 8Pc. Chaque actionneur est relié à son arbre intermédiaire d'entraînement au moyen d'un lien souple d'actionnement 98, par exemple une courroie. Par exemple, chaque actionneur et chaque arbre intermédiaire d'entraînement porte respectivement une poulie ou une roue dentée afin de coopérer avec un lien souple d'actionnement et ainsi transmettre le mouvement de rotation de l'actionneur à l'arbre intermédiaire d'actionnement. Les arbres intermédiaires d'actionnement s'étendent sensiblement parallèlement entre eux et parallèlement aux actionneurs. Ils sont disposés les uns à côté des autres de sorte que leur positionnement, vu latéralement, forme un triangle ou un losange et permette un encombrement moindre en hauteur. Cette caractéristique permet de conférer au support d'actionnement un encombrement général ressemblant à un avant-bras humain. Vu de haut, les six arbres intermédiaires d'entraînement sont disposés de manière à former quatre colonnes ou quatre rangées : R1, R2, R3 et R4, voir la figure 5. La rangée R1 comprend l'arbre intermédiaire d'entraînement 8a. La rangée R2 comprend les arbres intermédiaires d'entraînement 8b et 8c superposés. La rangée R3 comprend les arbres intermédiaires d'entraînement 8Pb et 8Pc superposés. La rangée R4 comprend l'arbre intermédiaire d'entraînement 8Pa.

En référence aux figures 4, 5, 6, 7, 8, les actionneurs et les arbres intermédiaires d'entraînement sont disposés tête-bêche. Le long de chaque côté latéral du support d'actionnement 101, trois actionneurs sont reliés avec trois arbres intermédiaires respectifs au moyen d'un lien souple d'actionnement 98, voir figures 7 et 8.

Les arbres intermédiaires d'entraînement sont reliés aux articulations des structures articulées par l'intermédiaire de liens souples d'entraînement ou câbles 96 déjà décrits.

Chaque arbre intermédiaire d'entraînement 8a, 8b, 8c est relié à un seul rang d'articulations ; les autres arbres intermédiaires d'entraînement 8Pa, 8Pb, 8Pc sont chacun reliés à une seule articulation. En référence à la figure 9, l'arbre intermédiaire d'entraînement 8a est relié au rang d'articulations d'abduction-adduction AA comprenant les articulations 2a et 4a des phalanges 22 et 42. L'arbre intermédiaire d'entraînement 8a porte deux poulies émettrices présentant chacune deux points d'ancrage pour deux liens souples d'entraînement, lesdits deux liens souples étant raccordés à des poulies réceptrices 325, 326 décrites précédemment. Afin d'obtenir un rapprochement ou un écartement synchronisé de l'index et de l'annulaire, les liens souples d'entraînement raccordés à l'arbre 8a doivent être disposés de manière symétrique par rapport à un plan géométrique médian longitudinal parallèle à un plan xz. En outre visible sur la figure 9, l'arbre intermédiaire d'entraînement 8Pa est relié à l'articulation d'abduction-adduction 5a du pouce. L'arbre 8Pa porte une poulie émettrice présentant deux points d'ancrage pour deux liens souples d'entraînement qui sont raccordés à des poulies réceptrices 325, 326 décrites précédemment.

En référence à la figure 10, l'arbre intermédiaire d'entraînement 8b est relié au rang d'articulations métacarpo phalangienne MCP 2b, 3b et 4b des phalanges 22, 32 et 42. L'arbre 8b porte trois poulies émettrices présentant chacune deux points d'ancrage pour deux liens souples d'entraînement, lesdits deux liens souples étant raccordés à des poulies réceptrices 525, 526 décrites précédemment. En outre visible sur la figure 10, l'arbre intermédiaire d'entraînement 8Pb est relié à l'articulation de flexion-extension 5b du pouce. L'arbre 8Pb porte une poulie émettrice présentant deux points d'ancrage pour deux liens souples d'entraînement qui sont raccordés à des poulies réceptrices 525, 526 décrites précédemment.

En référence à la figure 11, l'arbre intermédiaire d'entraînement 8c est relié au rang d'articulations interphalangienne proximale IPP comprenant les articulations 2c, 3c, 4c des phalanges 23, 33 et 43. L'arbre 8c porte trois poulies émettrices présentant chacune deux points d'ancrage pour deux liens souples d'entraînement, lesdits deux liens souples étant raccordés à des poulies réceptrices 725, 726 décrites précédemment. En outre visible sur la figure 11, l'arbre intermédiaire d'entraînement 8Pc est relié à l'articulation de flexion-extension 5c du pouce. L'arbre 8Pc porte une poulie émettrice présentant deux points d'ancrage pour deux liens souples d'entraînement qui sont raccordés à des poulies réceptrices 725, 726 décrites précédemment.

Enfin, l'actionnement de l'arbre intermédiaire d'entraînement 8c permet en outre d'actionner le rang d'articulations interphalangienne distale IPD comprenant les articulations 2d, 3d, 4d par l'intermédiaire des liens souples de raccordement ou câbles 142, 144 décrits précédemment. De même, l'arbre intermédiaire d'entraînement 8Pc permet d'actionner l'articulation 5d par l'intermédiaire des liens souples de raccordement 142, 144 décrits précédemment. Cette caractéristique permet de synchroniser le mouvement angulaire des articulations 2d, 3d, 4d, 5d avec le mouvement angulaire des articulations 2c, 3c, 4c, 5c.

## Revendications

1. Dispositif (1) formant une main robotique, **caractérisé en ce qu'**il comprend :
- une embase (100) formant une paume de main,
- au moins deux structures articulées (2, 3, 4, 5) formant chacune un doigt robotique, chaque structure articulée étant reliée fonctionnellement à l'embase et comprenant au moins une articulation (2a, 2b, 2c, 2d, 3b, 3c, 3d, 4a, 4b, 4c, 4d), de manière à mettre en mouvement ladite structure articulée par rapport à l'embase,
- au moins un mécanisme d'entraînement pour mettre en mouvement chaque articulation,
- au moins un actionneur (M1, M2, M3, MP1, MP2, MP3) agencé pour actionner l'au moins un mécanisme d'entraînement au moyen au moins d'un lien souple d'entraînement (96) reliant et entraînant l'au moins un mécanisme d'entraînement
- au moins un arbre intermédiaire d'entraînement (8a, 8b, 8c, 8Pa, 8Pb, 8Pc) afin de renvoyer un mouvement de rotation de l'au moins un actionneur (M1, M2, M3), disposé fonctionnellement entre l'au moins un actionneur et l'au moins un mécanisme d'entraînement actionné, de façon que :
- l'au moins un arbre intermédiaire d'entraînement (8a, 8b, 8c) est actionné par un actionneur (M1, M2, M3), et
- l'au moins un arbre intermédiaire d'entraînement (8a, 8b, 8c) est relié fonctionnellement à au moins deux mécanismes d'entraînement distincts, chaque mécanisme d'entraînement étant relié fonctionnellement audit arbre intermédiaire d'entraînement (8a, 8b, 8c) au moyen de l'au moins un lien souple d'entraînement (96).

2. Dispositif (1) selon la revendication 1, **caractérisé en ce qu'**au moins un arbre intermédiaire d'entraînement (8a, 8b, 8c) est relié fonctionnellement à au moins deux mécanismes d'entraînement, chaque mécanisme étant disposé fonctionnellement sur une structure articulée distincte (2, 3, 4, 5).

3. Dispositif (1) selon la revendication 1, **caractérisé en ce que** les au moins deux structures articulées (2, 3, 4, 5) comprennent chacune au moins deux éléments de structure (21, 22, 23, 24, 31, 32, 33, 34, 41, 42, 43, 44, 51, 52, 53, 54) et au moins deux articulations (2a, 2b, 2c, 2d, 3b, 3c, 3d, 4a, 4b, 4c, 4d, 5a, 5b, 5c, 5d) de différents types et/ou de différentes fonctions, qui sont reliés fonctionnellement ensemble pour former un doigt robotique à au moins deux articulations, et **en ce que** l'au moins un arbre intermédiaire d'entraînement (8a, 8b, 8c) est relié fonctionnellement à au moins deux mécanismes d'entraînement associés à une articulation de même type et/ou fonction, chaque mécanisme étant disposé sur une structure articulée distincte.

4. Dispositif (1) selon la revendication 1, **caractérisé en ce que** les au moins deux structures articulées (2, 3, 4, 5) comprennent chacune au moins deux éléments de structure (21, 22, 23, 24, 31, 32, 33, 34, 41, 42, 43, 44, 51, 52, 53, 54) et au moins deux articulations (2a, 2b, 2c, 2d, 3b, 3c, 3d, 4a, 4b, 4c, 4d, 5a, 5b, 5c, 5d) de différents types et/ou de différentes fonctions, qui sont reliés fonctionnellement ensemble pour former un doigt robotique à au moins deux articulations, et **en ce que** les au moins deux articulations sont couplées l'une à l'autre au moyen d'un lien souple de raccordement (142, 144).

5. Dispositif (1) selon l'une des revendications précédentes, **caractérisé en ce que** l'au moins un actionneur (M1, M2, M3, MP1, MP2, MP3) est associé à un seul arbre intermédiaire d'entraînement (8a, 8b, 8c, 8Pa, 8Pb, 8Pc).

6. Dispositif (1) selon l'une des revendications précédentes, **caractérisé en ce que** l'au moins un actionneur (M1, M2, M3, MP1, MP2, MP3) comprend un axe de rotation qui est parallèle et non coaxial avec l'axe de l'au moins un arbre intermédiaire d'entraînement (8a, 8b, 8c, 8Pa, 8Pb, 8Pc), de façon que chaque arbre intermédiaire d'entraînement est actionné par un actionneur (M1, M2, M3, MP1, MP2, MP3) au moyen d'au moins un lien souple d'actionnement (98).

7. Dispositif (1) selon l'une des revendications précédentes, **caractérisé en ce qu'**il comprend au moins deux actionneurs (M1, M2, M3, MP1, MP2, MP3), un premier actionneur et un deuxième actionneur, agencés parallèlement et l'un à côté de l'autre, dont le deuxième actionneur présente un arbre de rotation débouchant d'un côté opposé à celui du premier actionneur.

8. Dispositif (1) selon l'une des revendications précédentes, **caractérisé en ce que** l'au moins une articulation (2b, 2c, 2d, 3b, 3c, 3d, 4b, 4c, 4d, 5b, 5c, 5d) est du type réalisant une liaison de pivotement autour d'un axe de flexion par rapport à l'embase, et **en ce que** l'axe de l'au moins un arbre intermédiaire d'entraînement (8a, 8b, 8c, 8Pa, 8Pb, 8Pc) est sensiblement parallèle à l'axe de flexion.

9. Dispositif (1) selon l'une des revendications précédentes, **caractérisé en ce que** l'au moins un arbre intermédiaire d'entraînement (8a, 8b, 8c, 8Pa, 8Pb, 8Pc) comprend au moins une poulie d'entraînement (81) et l'au moins un mécanisme d'entraînement comprend au moins une poulie de réception (61), de façon que l'au moins un lien souple d'entraînement (96) est relié auxdites poulies (61, 81).

10. Dispositif (1) selon l'une des revendications précédentes, **caractérisé en ce qu'**il comprend un support (101) sur lequel l'au moins un actionneur (M1, M2, M3, MP1, MP2, MP3) et l'au moins un arbre intermédiaire d'entraînement (8a, 8b, 8c, 8Pa, 8Pb, 8Pc) sont fixés, le support étant relié fonctionnellement à l'embase (100).

11. Robot comprenant au moins un bras articulé, lequel comprenant au moins un dispositif (1) formant une main robotique selon l'une des revendications précédentes.

## Patentansprüche

1. Vorrichtung (1), die eine Roboterhand bildet, **dadurch gekennzeichnet, dass** sie Folgendes umfasst:
- eine Basis (100), die eine Handfläche bildet,
- mindestens zwei Gelenkstrukturen (2, 3, 4, 5), die jeweils einen Roboterfinger bilden, wobei jede Gelenkstruktur funktional mit der Basis verbunden ist und mindestens ein Gelenk (2a, 2b, 2c, 2d, 3b, 3c, 3d, 4a, 4b, 4c, 4d) umfasst, um die Gelenkstruktur in Bezug auf die Basis in Bewegung zu setzen,
- mindestens einen Antriebsmechanismus, um jedes Gelenk in Bewegung zu setzen,
- mindestens ein Stellglied (M1, M2, M3, MP1, MP2, MP3), das so angeordnet ist, dass es den mindestens einen Antriebsmechanismus mittels mindestens einer flexiblen Antriebsverbindung (96) betätigt, die den mindestens einen Antriebsmechanismus verbindet und antreibt,
- mindestens eine Zwischenantriebswelle (8a, 8b, 8c, 8Pa, 8Pb, 8Pc), um eine Drehbewegung des mindestens einen Stellglieds (M1, M2, M3) weiterzuleiten, das funktional zwischen dem mindestens einen Stellglied und dem mindestens einen betätigten Antriebsmechanismus angeordnet ist, so dass:
- die mindestens eine Zwischenantriebswelle (8a, 8b, 8c) von einem Stellglied (M1, M2, M3) betätigt wird, und
- die mindestens eine Zwischenantriebswelle (8a, 8b, 8c) funktional mit mindestens zwei separaten Antriebsmechanismen verbunden ist, wobei jeder Antriebsmechanismus mittels der mindestens einen flexiblen Antriebsverbindung (96) funktional mit der Zwischenantriebswelle (8a, 8b, 8c) verbunden ist.

2. Vorrichtung (1) nach Anspruch 1, **dadurch gekennzeichnet, dass** mindestens eine Zwischenantriebswelle (8a, 8b, 8c) funktional mit mindestens zwei Antriebsmechanismen verbunden ist, wobei jeder Mechanismus funktional auf einer separaten Gelenkstruktur (2, 3, 4, 5) angeordnet ist.

3. Vorrichtung (1) nach Anspruch 1, **dadurch gekennzeichnet, dass** die mindestens zwei Gelenkstrukturen (2, 3, 4, 5) jeweils mindestens zwei Strukturelemente (21, 22, 23, 24, 31, 32, 33, 34, 41, 42, 43, 44, 51, 52, 53, 54) und mindestens zwei Gelenke (2a, 2b, 2c, 2d, 3b, 3c, 3d, 4a, 4b, 4c, 4d, 5a, 5b, 5c, 5d) verschiedener Typen und/oder verschiedener Funktionen umfassen, die funktional miteinander verbunden sind, um einen Roboterfinger mit mindestens zwei Gelenken zu bilden, und dass die mindestens eine Zwischenantriebswelle (8a, 8b, 8c) funktional mit mindestens zwei Antriebsmechanismen verbunden ist, die mit einem Gelenk desselben Typs und/oder derselben Funktion verbunden sind, wobei jeder Mechanismus auf einer separaten Gelenkstruktur angeordnet ist.

4. Vorrichtung (1) nach Anspruch 1, **dadurch gekennzeichnet, dass** die mindestens zwei Gelenkstrukturen (2, 3, 4, 5) jeweils mindestens zwei Strukturelemente (21, 22, 23, 24, 31, 32, 33, 34, 41, 42, 43, 44, 51, 52, 53, 54) und mindestens zwei Gelenke (2a, 2b, 2c, 2d, 3b, 3c, 3d, 4a, 4b, 4c, 4d, 5a, 5b, 5c, 5d) verschiedener Typen und/oder verschiedener Funktionen umfassen, die funktional miteinander verbunden sind, um einen Roboterfinger mit mindestens zwei Gelenken zu bilden, und dass die mindestens zwei Gelenke mittels einer elastischen Anschlussverbindung (142, 144) miteinander gekoppelt sind.

5. Vorrichtung (1) nach einem der vorhergehenden Ansprüche, **dadurch gekennzeichnet, dass** das mindestens eine Stellglied (M1, M2, M3, MP1, MP2, MP3) nur mit einer Zwischenantriebswelle (8a, 8b, 8c, 8Pa, 8Pb, 8Pc) verbunden ist.

6. Vorrichtung (1) nach einem der vorhergehenden Ansprüche, **dadurch gekennzeichnet, dass** das mindestens eine Stellglied (M1, M2, M3, MP1, MP2, MP3) eine Drehachse umfasst, die parallel und nicht koaxial zur Achse der mindestens einen Zwischenantriebswelle (8a, 8b, 8c, 8Pa, 8Pb, 8Pc) ist, so dass jede Zwischenantriebswelle über ein Stellglied (M1, M2, M3, MP1, MP2, MP3) mittels mindestens einer flexiblen Betätigungsverbindung (98) betätigt wird.

7. Vorrichtung (1) nach einem der vorhergehenden Ansprüche, **dadurch gekennzeichnet, dass** sie mindestens zwei Stellglieder (M1, M2, M3, MP1, MP2, MP3), ein erstes Stellglied und ein zweites Stellglied, umfasst, die parallel und nebeneinander angeordnet sind, wobei das zweite Stellglied eine Drehwelle aufweist, die auf einer dem ersten Stellglied gegenüberliegenden Seite mündet.

8. Vorrichtung (1) nach einem der vorhergehenden Ansprüche, **dadurch gekennzeichnet, dass** das mindestens eine Gelenk (2b, 2c, 2d, 3b, 3c, 3d, 4b, 4c, 4d, 5b, 5c, 5d) von dem Typ ist, der eine Schwenkverbindung um eine Biegeachse in Bezug auf die Basis herstellt, und wobei die Achse der mindestens einen Zwischenantriebswelle (8a, 8b, 8c, 8Pa, 8Pb, 8Pc) im Wesentlichen parallel zur Biegeachse verläuft.

9. Vorrichtung (1) nach einem der vorhergehenden Ansprüche, **dadurch gekennzeichnet, dass** die mindestens eine Zwischenantriebswelle (8a, 8b, 8c, 8Pa, 8Pb, 8Pc) mindestens eine Antriebsriemenscheibe (81) umfasst und der mindestens eine Antriebsmechanismus mindestens eine angetriebene Riemenscheibe (61) umfasst, so dass die mindestens eine flexible Antriebsverbindung (96) mit den Riemenscheiben (61, 81) verbunden ist.

10. Vorrichtung (1) nach einem der vorhergehenden Ansprüche, **dadurch gekennzeichnet, dass** sie einen Halter (101) umfasst, an dem das mindestens eine Stellglied (M1, M2, M3, MP1, MP2, MP3) und die mindestens eine Zwischenantriebswelle (8a, 8b, 8c, 8Pa, 8Pb, 8Pc) befestigt sind, wobei der Halter funktional mit der Basis (100) verbunden ist.

11. Roboter, der mindestens einen Gelenkarm umfasst, der mindestens eine Vorrichtung (1) umfasst, die eine Roboterhand nach einem der vorhergehenden Ansprüche bildet.

## Claims

1. A device (1) forming a robotic hand, **characterised in that** it comprises:
- a base (100) forming a palm of the hand,
- at least two articulated structures (2, 3, 4, 5) each forming a robot finger, each articulated structure being functionally connected to the base and comprising at least one articulation (2a, 2b, 2c, 2d, 3b, 3c, 3d, 4a, 4b, 4c, 4d), so as to move said articulated structure relative to the base,
- at least one drive mechanism to move each articulation,
- at least one actuator (M1, M2, M3, MP1, MP2, MP3) arranged to actuate the at least one drive mechanism by means of at least one flexible drive link (96) connecting and driving the at least one drive mechanism
- at least one intermediate drive shaft (8a, 8b, 8c, 8Pa, 8Pb, 8Pc) in order to return a rotational movement of the at least one actuator (M1, M2, M3), functionally disposed between the at least one actuator and the at least one drive mechanism actuated, such that:
- the at least one intermediate drive shaft (8a, 8b, 8c) is actuated by an actuator (M1, M2, M3), and
- the at least one intermediate drive shaft (8a, 8b, 8c) is functionally connected to at least two distinct drive mechanisms, each drive mechanism being functionally connected to said intermediate drive shaft (8a, 8b, 8c) by means of the at least one flexible drive link (96).

2. The device (1) according to claim 1, **characterised in that** at least one intermediate drive shaft (8a, 8b, 8c) is functionally connected to at least two drive mechanisms, each mechanism being functionally disposed on a distinct articulated structure (2, 3, 4, 5).

3. The device (1) according to claim 1, **characterised in that** the at least two articulated structures (2, 3, 4, 5) each comprise at least two structure elements (21, 22, 23, 24, 31, 32, 33, 34, 41, 42, 43, 44, 51, 52, 53, 54) and at least two articulations (2a, 2b, 2c, 2d, 3b, 3c, 3d, 4a, 4b, 4c, 4d, 5a, 5b, 5c, 5d) of different types and/or of different functions, which are functionally connected together to form a robot finger at at least two articulations, and **in that** the at least one intermediate drive shaft (8a, 8b, 8c) is functionally connected to at least two drive mechanisms associated with a articulation of the same type and/or function, each mechanism being disposed on a distinct articulated structure.

4. The device (1) according to claim 1, **characterised in that** the at least two articulated structures (2, 3, 4, 5) each comprise at least two structure elements (21, 22, 23, 24, 31, 32, 33, 34, 41, 42, 43, 44, 51, 52, 53, 54) and at least two articulations (2a, 2b, 2c, 2d, 3b, 3c, 3d, 4a, 4b, 4c, 4d, 5a, 5b, 5c, 5d) of different types and/or of different functions, which are functionally connected together to form a robot finger at at least two articulations, and **in that** the at least two articulations are coupled to each other by means of a flexible connection link (142, 144).

5. The device (1) according to one of the preceding claims, **characterised in that** the at least one actuator (M1, M2, M3, MP1, MP2, MP3) is combined with a single intermediate drive shaft (8a, 8b, 8c, 8Pa, 8Pb, 8Pc).

6. The device (1) according to one of the preceding claims, **characterised in that** the at least one actuator (M1, M2, M3, MP1, MP2, MP3) comprises an axis of rotation that is parallel and not coaxial with the axis of the at least one intermediate drive shaft (8a, 8b, 8c, 8Pa, 8Pb, 8Pc), so that each intermediate drive shaft is actuated by an actuator (M1, M2, M3, MP1, MP2, MP3) by means of at least one actuating flexible link (98).

7. The device (1) according to one of the preceding claims, **characterised in that** it comprises at least two actuators (M1, M2, M3, MP1, MP2, MP3), a first actuator and a second actuator, arranged in parallel and next to each other, the second actuator of which has a rotation shaft opening onto a side opposite that of the first actuator.

8. The device (1) according to one of the preceding claims, **characterised in that** the at least one articulation (2b, 2c, 2d, 3b, 3c, 3d, 4b, 4c, 4d, 5b, 5c, 5d) is of the type making a pivot connection about a bending axis relative to the base, and **in that** the axis of the at least one intermediate drive shaft (8a, 8b, 8c, 8Pa, 8Pb, 8Pc) is substantially parallel to the bending axis.

9. The device (1) according to one of the preceding claims, **characterised in that** the at least one intermediate drive shaft (8a, 8b, 8c, 8Pa, 8Pb, 8Pc) comprises at least one drive pulley (81) and the at least one drive mechanism comprises at least one receiving pulley (61), such that the at least one flexible drive link (96) is connected to said pulleys (61, 81).

10. The device (1) according to one of the preceding claims, **characterised in that** it comprises a support (101) to which the at least one actuator (M1, M2, M3, MP1, MP2, MP3) and the at least one intermediate drive shaft (8a, 8b, 8c, 8Pa, 8Pb, 8Pc) are attached, the support being functionally connected to the base (100).

11. A robot comprising at least one articulated arm, which comprises at least one device (1) forming a robotic hand according to one of the preceding claims.
